# EUROPEAN PATENT APPLICATION

(11) **EP 1 974 818 A1**
(43) Date of publication of application: **01.10.2008**
(21) Application number: 08152976.0
(22) Date of filing: 19.03.2008
(51) Int. Cl.: B01L 3/00, B32B 25/08, B65D 77/20, C08J 5/12

(54) **Device and method for use in analysis**

(30) Priority: 23.03.2007 FI 20075191
(71) Applicant: Bioinnovatons Oy, 02150 ESPOO (FI)
(72) Inventor: Turner, Bruce R., Exeter, NH 03833 (US)
(74) Representative: Sundman, Patrik Christoffer

(57) **Abstract**

The invention relates to sealing device for microplates, a method of sealing and a novel use. The sealing device is used for isolating the interior of a biological reaction vessel from the exterior of the reaction vessel and comprises a generally planar sealing layer intimately attachable to the vessel by heating so as to cover an open end of the vessel. According to the invention, the sealing layer (20) is formed of elastomeric material capable of forming a heat-actuated bond to the vessel at an elevated temperature achievable solely by the heated platen (28) of a thermal cycling apparatus operating at normal thermal cycling protocol operating temperatures and placed in contact with the sealing device. The invention provides a simplified device and method for sealing microplates effectively.

## Description

This invention relates to closures of microplates and various other vessels used to contain biological reagents and in particular thermal-cycling vessels and sealing systems employed to prevent cross contamination and escape of vapors from the thermal-cycling vessels. In particular, the invention concerns a sealing device according to the preamble of claim 1, a method for sealing a reaction vessel according to the preamble of claim 20 and a new use.

In performing analytical techniques such as the polymerase chain reaction (PCR), quantitative PCR reactions and thermal cycle DNA sequencing, a large number of biological samples are thermally cycled simultaneously. This is typically done by using multiple-well vessels capable of accommodating a plurality of individual reaction solutions in a grid-like geometry. Such vessels are commonly known as a "microplate" or a "microtiter plate". Several variations of microplates are well known in the art.

The aqueous analyte solution is thermally cycled from a low temperature of approximately 35°C to 72°C and to a high temperature which is normally 90°C to 95°C. In a typical analysis, 20-50 thermal cycles between the lowest and highest temperature are performed. Without some form of a sealing device, the aqueous phase is quickly reduced in volume through the loss of water vapor. This changes the concentrations of reaction components and either invalidates the test results or worse yet causes the reaction to fail. Therefore, gas-tight seals are provided on the reaction vessels in order to seal the reaction spaces and to avoid evaporation. Another function of the sealing devices is to prevent cross contamination of samples.

In the prior art so-called non-sample contact sealing methods, a seal is placed in contact with the reaction vessel so as to trap a volume of air inside the sample vessel above the reaction volume (assuming, of course, that the vessel is not completely full of liquid). Condensation of vapor inside the seal is prevented by maintaining the seal (and the upper portion of the vessel) at a sufficiently high temperature. This is typically accomplished by the application of a heated platen to the upper surface of the sealing device. The heated platen is typically part of the thermal cycling apparatus and typically is also capable of applying a mechanical clamping force to the sealing device.

In a common implementation of the non-sample contact sealing method a plastic cap is inserted into the mouth of each individual reaction space of a vessel (also called tubes or wells of the vessel). The vessel may be made of polypropylene or similar material. The caps are usually tight-fitting to minimize leakage. However, there are certain disadvantages in terms of performance, convenience and cost of such caps. Because the caps must be made with a tight fit, they are difficult to insert and remove. For optimum function, the caps must be inserted using special tools. The force of removal can sometimes generate aerosols or splashing that may result in cross contamination of samples. In addition, the caps are difficult to manufacture for a consistent fit in the tube and relatively costly.

An alternative non-sample-contact sealing method in the prior art is the use of heat-sealable films, covers or adhesive tapes, as are described in US 6896848 to Warhurst et al., US 5364790 to Atwood et al., and US 5324555 to Hughart et al.

For an adhesive tape to be useful, it must form a gas-tight seal around the mouths of thermal cycling vessels. The mouth surfaces are typically somewhat rough, and it is difficult to maintain that seal at the required temperature in view of the internal pressures within the vessel, the presence of water vapors, as well as the stresses placed on the vessels and the tape by cycling through a number of wide temperature variations. In addition, in a multi-vessel array, the height variations among the various components in a sealing system (a sealing system consists of the wells of the thermal cycler, the vessels themselves, the sealing device, and the device for applying pressure from above) typically amount to more than 0.1 mm, which is a typical thickness of a tape, whereby sealing may not be good enough and careful positioning and adhering of the tape is needed.

Heat-sealing films are typically used on multiple well thermal cycling vessels. As with the adhesive seal devices, in order for heat seal type sealing devices to be useful they must form a gas-tight seal around the mouths of thermal cycling vessels. Typical prior art heat seal devices are typically constructed as a laminated film having a heat resistant layer of foil or polymer film backer layer laminated to a layer of material which is compatible with the material of the microplate and may be bonded to the plate by application of sufficient heat to melt the plastic laminate layer and the contacted surface of the vessel. Typically, because high temperatures above the glass transition phase of the plastic are required, the bonding of heat seal device to the vessel is accomplished as an independent operation using specialized equipment operating at high temperatures, typically in the range of 130° C and up. There are several disadvantages to this operation. First, as a separate operation, the process requires a lengthy extra step which places extra burden upon the time and resources of the laboratory. Second, because of the high temperatures required, there is elevated risk of heat damage to the biological samples in the vessel being sealed. Third, increased handling required prior to sealing increases the risk of splashing, sample contamination, sample cross contamination or other handling related sample damage or loss. Fourth, the bonding operation actually melts and deforms the plastic at the mouth of the individual tubes. In the case of microplate vessels which have smaller diameter mouth openings, the deformation of the mouth by melting may partially obscure the tube mouth which in turn increases difficulty of retrieval of samples after thermal cycling and also reduces the aperture through which the fluorescent signal light emitted by the sample may be detected thereby risking reduced quantitative PCR assay sensitivity. So, while heat seal devices offer effective sealing, it is obvious that they suffer from a number of undesirable features, many as a result of the elevated temperatures which they require in order to produce an effective seal of the vessel.

US 5721136 teaches sealing of vessels for biochemical reactions by a multilayer composite sheet material which has at least two layers, one layer providing strength and integrity to the material and the second layer being relatively thick and comprising a substance deformable under pressure and with a tacky surface to contact and seal vessels for biochemical reactions, this layer typically being a silicone and may include compounds that increase the tack of the layer.. This solution offers the convenience of ease of use since it may simply be situated on the vessel then placed directly in the thermal cycling apparatus. Since it relies on pressure to deform the gasket-like silicone pad, it does not require any precursor heat sealing steps in order to be functional. However, this method is a pressure gasket type approach which requires the application of pressure by the lid platen of the thermal cycler apparatus in order to deform the material sufficiently to produce a seal. The amount of pressure applied by the heated platen and evenness of pressure across the sealing device surface varies greatly between manufacturers of thermal cycling apparatus. This variability produces inconsistencies in sealer deformation and consequently in the sealing performance from well to well. Often the sample wells around the perimeter of the vessel are most negatively affected. Vapor pressures build in the tube during thermal cycling and result in a brief escape or "burp" of vapor from the tube during the first few thermal cycles. Users having thermal cycling apparatus which allows for user definable platen pressure settings will sometimes increase pressure in an effort to deform the sealer sufficiently to achieve 100% sealing. The increased pressure often results in the mouths of the vessels producing a "cookie cutter" effect whereby plugs of the elastomer sealing material are left behind in the mouth of the tube after removal of the sealing device from the vessel. This is obviously undesirable because the plug obstructs the well opening thereby preventing sample access.

US 5721136 describes in a detailed way problems of other prior art and is, for that part, incorporated herein by reference.

It is an object of the present invention to overcome at least some of the above problems, in particular to provide a heat sealing device which may be bonded to the vessel in a simplified manner.

The object of the invention is accomplished by providing to the sealing device a sealing layer capable of forming a chemical bond to a vessel when a heated platen of a thermal cycling apparatus is placed in contact with the sealing device and heated to an elevated temperature regime of a microbiological thermal cycling apparatus, that is, preferably about 85°C to 110°C, in every case below 120°C. Thus, the effective and stable (bonded) sealing for thermal cycling can be carried out at a considerably elevated temperature using the material properties of the sealing layer, but no separate high-temperature bonding apparatus is required. Microplates are typically made of polypropylene, whereby at least bondability of the device to polypropylene at said temperatures is of importance in a number of applications.

According to one embodiment, the sealing device contains a sealing layer, which is placed against the open end of the vessel, the sealing layer being made of thermoplastic elastomer (TPE) capable of deforming under heat and pressure so as to intimately mate with the shape of the vessel and bond to the vessel, retaining its shape after cooling.

In a first principal embodiment, the sealing means is essentially comprised of the sealing layer. This does not preclude the option that the sealing means comprises a removable release liner on one side or both sides thereof for protecting the sealing layer during shipping and handling as well as to releasably form a barrier over the sealing layer to prevent adhesion of contaminants until it is used in a thermal cycling device. Preferably, the sealing layer is optically clear and possesses the properties which allow it to conform to the vessel geometry for maximum sealing/bonding area and bonds to the vessel to achieve a seal.

In a second principal embodiment the sealing means is formed of composite material comprising a backing layer and a sealing layer. This provides additional advantages as described in more detail below.

The sealing layer is most advantageously made of thermoplastic material. At least a styrene-ethylene/butylene-styrene block copolymer has been found to have the properties desired for forming a suitable layer, but a person skilled in the art may find other functional compositions also.

According to one advantageous embodiment, the sealing layer has a polypropylene based molecular structure. In such thermoplastic material, crosslinks are temporarily broken allowing some of the free molecules to form weak chemical bonds with the polypropylene of the vessel under relatively low temperatures. Upon cooling, the material again crosslinks and therefore retains the shape that it took on during the sealing process.

In a particularly advantageous embodiment, the sealing layer is free of any added tack-increasing compounds, as the base material of the layer is itself capable of forming a bond with the plastic vessel.

More specifically, the present sealer is characterized by what is stated in the characterizing part of claim 1.

The method according to the invention is characterized by what is stated in the characterizing part of claim 20.

The use is characterized in claim 23.

A significant advantage of the invention is that it eliminates the need of a separate seal-bonding stage in performing an assay using sample vessels such as microplates. That is, advantage can be taken of the heated plate, which in every case is disposed on the vessel during the process for preventing condensation of sample vapor, as described above. Consequently, the risk of contamination of samples is reduced, equipment costs are decreased and the time required for preparations of the assay is shortened.

Thus there is a need in this field for a technique for sealing vessels which provides the ease of use and removal of the sealing device of US 5721136, the sealing effectiveness of a heat seal system and the optical clarity of a clear heat seal or adhesive film together with the ability to consistently access samples using a needle and septum concept.

Additional objects and goals of the invention are obtained by means of its advantageous embodiments.

It is to be noted that when carrying out DNA amplification by the PCR method, the heated top platen of the thermal cycling apparatus used is held in continuous contact with the sealing device placed on top of the vessel. During the process, the temperature of the platen is kept elevated, typically following the temperature cycling sequence used (the temperature of the platen can be kept a couple of degrees above the target temperature to compensate for the temperature gradient possibly developed into the sealing device). To avoid boiling of the aqueous phase of the sample within the vessel, dying of enzymes or biomolecules contained therein, or termination of the amplification reaction, the temperature of the heated platen operating at normal protocol temperatures can not be high enough to initiate tight bonding of conventional sealing devices having the critical temperature of at least 120°C or more.

On the other hand, the silicone-containing sealing device of US 5721136 does not form a stable heat-initiated bond to the vessel, as in the present invention, but works as purely as a tacky gasket, unlike the device according to the present invention.

According to one embodiment of the invention there is provided a sealing device which seals while offering the optical property of light transmission in wavelengths useful for quantitative PCR detection.

According to another embodiment, the sealing device seals test vessels in an efficient manner throughout thermal cycling while allowing access to any or all of the vials without causing cross contamination or loss of sample during removal of the sealing device.

According to a further embodiment, a sealing device is provided which may function as a pierceable, self healing/sealing septum thereby allowing access to samples without removing the sealing device from the vessel.

The versions of these sealers which are clear, that is to say will pass certain wavelengths of light, are particularly useful in quantitative PCR applications.

For quantitative PCR applications, yet another undesirable feature of the sealing system described in US 5721136 is the decreased transmission of light by the sealing device at wavelengths utilized in quantitative PCR protocols, rendering the sealing devices useless in quantitative PCR applications.

The present sealing device can be manufactured in such physical dimensions and using such material(s) that it seals the despite the presence of variations in the heights of the top surfaces of the individual test vessels positioned within the thermal cycling device's rack or temperature control block.

Next, the embodiments and advantages of the invention are described more closely with reference to the attached drawings, in which
Fig. 1a shows in an axonometric view a one-layered sealing device,
Fig. 1b shows in an axonometric view a two-layered sealing device,
Fig. 2 depicts in a schematic side view an embodiment of simultaneous sealing of microplate and lens-forming in a thermal cycler,
Fig. 3 illustrates an embodiment of formed seal and lens structure on a microplate, and
Fig. 4 illustrates a detailed view a lens structure on a microplate.

Disclosed herein is an improvement for sealing systems used in apparatuses for thermally cycling reaction materials contained in at least one reaction vessel, the at least one reaction vessel having a closed end and an open end. The reaction vessel in typically in the form of a two-dimensional microplate containing a plurality of individual sample tubes arranged in a grid, or a one-dimensional microwell strip. The apparatus further includes a temperature control block for supporting the at least one reaction vessel at its closed end and a flat heated plate disposed above the open end of the at least one reaction vessel such that it can be brought into contact with the reaction vessel and even more importantly with the sealing device placed onto the vessel for individually sealing each of the tubes before the thermal cycling is started.

According to a preferred embodiment of the invention, the sealing device comprises a generally planar sealing layer intimately attachable to the vessel by heating so as to cover the open end of the vessel, the sealing layer being formed of elastomeric material capable of forming a heat-actuated chemical bond to a polypropylene vessel at an elevated temperature of less than 120°C, preferably 85°C to 110°C.

In a preferred embodiment, the sealing device comprises a multilayer composite material for sealing the open end of reaction vessels having
- at least one generally first planar layer formed of a low temperature conformable material for contact with, and sealing of, the open end of a reaction vessel,
- a second generally planar layer formed of a material which provides support to the first layer, the first and the second layers being joined together to form a unitary multilayer composite.

The first layer is preferably constructed of a material with hardness of between Shore 30 on the OO scale and Shore 43 on the A scale.

During operation, the sealing device is disposed between the flat heated platen and the open end of the at least one reaction vessel, such that the sealing layer comes into contact with the vessel, whereby the sealing layer conforms to and bonds with and seals the open end of the reaction vessel when the surface of the device is held on the open end by the pressure of the flat heated plate. This process is called low temperature heat sealing, as the temperature is typically at least 20°C lower than in conventional heat-sealing methods.

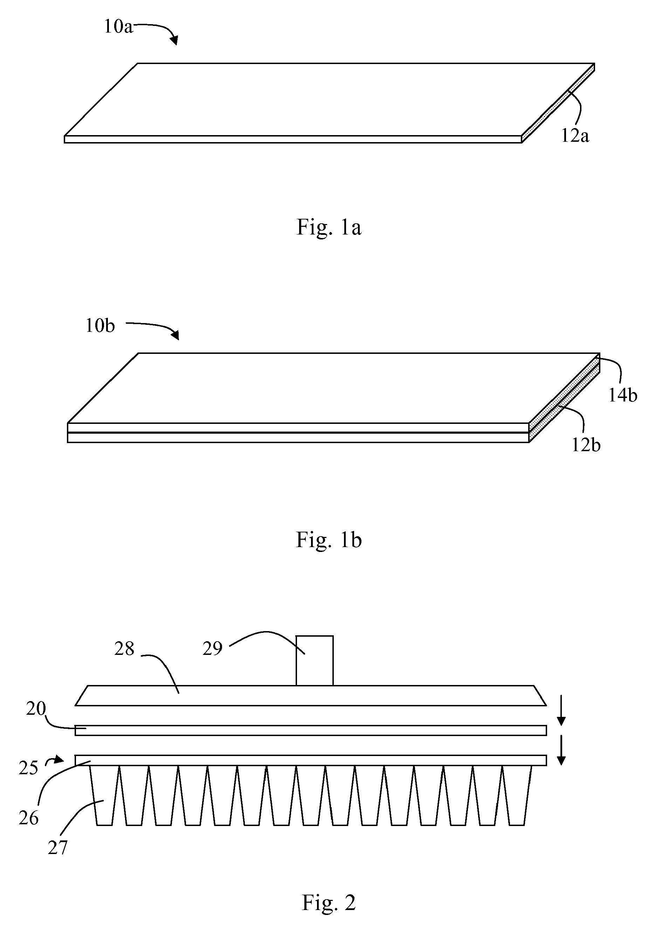

The second layer is preferred but, generally speaking, optional. That is, the sealing device may be comprised of the first layer only. Fig. 1a shows schematically a pad 10a according to a first principal embodiment corresponding to this concept. There is provided a layer 12a of material for contacting to and sealing an open end of a reaction vessel comprising at least one reaction cavity. The layer is adapted to conform to and heat seal the vessel geometry using only the heat of the platen of the thermal cycling apparatus at normal thermal cycling protocol operating temperatures, thereby forming an effective seal of the vessel.

Further, the sealing layer will soften sufficiently at the standard operating temperatures of the thermal cycling apparatus heated platen, typically 85°C to 110°C, such that it will conform to vessel geometry and form an intimate bond thereto.

Examples of suitable materials to be included to or for essentially forming the whole sealing layer include, but are not limited to, a family of compounds known as thermoplastic rubbers (or elastomers, TPE), in particular block copolymer TPEs, most advantageously containing a styrene-ethylene/butylene-styrene block copolymer. Such material may be formulated, for example, by GLS Corporation, McHenry, IL and may be formulated with hardness ranging from 30 00 on the Shore hardness scale to 43 A on the Shore hardness scale. As stated, sealing layers made from alternate materials which possess the requisite performance characteristics can be used as well within the scope of the present invention. A removable release liner easily removable from the sealing layer, for example, polyethylene film, may be initially attached to the sealing layer.

That is, according to a preferred embodiment, the reversible crosslink molecular structure of thermoplastic elastomers is taken advantage of in sealing. In contrast to conventional rubber, such as silicone rubber and other thermosetting materials which have been covalently cross-linked during extrusion, this provides the benefit of simultaneous effective conforming and bonding of the seal to the vessel. The reversible crosslink uses noncovalent, or secondary interactions between the polymer chains to bind them together. These interactions include hydrogen bonding and ionic bonding. By using noncovalent interactions to form crosslinks, the heating of the material results in breaking of the crosslinks and flow of the elastomer, even the formation of weak chemical bonds with mating materials of similar molecular structure. This allows the material to be processed, and most importantly in this application, to flow and conform to various mating geometries as well as to bond to the cycling vessel. When the material cools again, the crosslinks reform in the material, allowing the seal to retain its new shape.

Thermoplastic moulding and extrusion processes are used for thermoplastic elastomers, because they avoid the cross-linking step and can achieve very fast cycles times. For example, a styrene-ethylene/butylene-styrene block copolymer sealing pad can reform, bond and seal in less than 20 seconds under the heat and pressure of the heated platen of the thermal cycling instrument.

Two molecular approaches have been used to formulate TPEs, ionomers and block copolymers, the block copolymers approach being more advantageous in this context due to their low-temperature conformability and good bonding properties. A block copolymer is a copolymer in which the comonomers are separated into long sections of the polymer backbone chain. Each of these sections, called blocks, looks sort of like a homopolymer. A very common thermoplastic elastomer that is a block copolymer is SBS rubber. SBS stands for styrene-butadiene-styrene, because SBS is made up of a short chain of polystyrene, followed by a long chain of polybutadiene, followed by another short chain of polystyrene.

It is also possible to make a suitable thermoplastic elastomer using a block copolymer made form only one kind of monomer. For example, one can make polypropylene in which there are blocks of different tacticity. Such polypropylene, produced by a process known as metallocene catalysis polymerization, will possess atactic blocks and isotactic blocks. These blocks separate when heated just as they do in SBS rubber. They separate because the isotactic blocks will form crystals, but the atactic blocks are amorphous. So it behaves as an elastomer for the same reasons as SBS rubber does. For the same reason, that being the fact that the polypropylene blocks separate and as such are somewhat reactive while free, allow the material to form weak chemical bonds with mating polypropylene surfaces.

According to a preferred embodiment, the sealing layer is of a formulation offering the property of not only adhering to the heated platen of the thermal cycling apparatus under operating temperature and pressure, but also being pierceable and resilient; that is, having the ability to function as a self-closing (self-sealing) septum for injection or removal of material using a needle. This is an inherent property of many thermoplastic elastomers, which promotes their use in this context.

In another embodiment, depicted by Fig. 1b, the sealing device 10b consists of a composite material comprising, in addition to the sealing layer 12b, a backing layer 14b which may consist of any substance without great thermal resistance and that has optical properties that allow sufficient transmission of wavelengths of light utilized in quantitative PCR. Examples include polyethylene film, cycloolefin copolymer film, and laminates of these as well as other materials. The sealing layer 12b is typically injection molded (although it may be laminated in sheet form) over the backer film, is relatively thick, for example, between 0.1 mm and 2 mm.

Also the second layer 14b may be formed of material which allows functioning of the composite device as a piercable septum, or the second layer 14b may be releasable from the sealing layer 12b for allowing piercing.

In the manufacture of the multilayer composite material of the previous embodiment, the sealing material 12b may be over-molded onto the film backing layer. By suitably adjusting the thickness and hardness of the sealing layer 12b, a reliable seal can be formed with a wide variety of vessels. The thickness of the sealing layer 12b is should be large enough to compensate for the maximum expected height variation of the vessels positioned in the rack or temperature control block and all other components of the sealing systems. At the same time, it must not be so thick as to form an excessive thermal barrier or an excess of material such that as the material flows and conforms, it oozes excessively from the outer edges of the sealing device 10b at the point it interfaces with the vessel. Adhesion of the sealing layer 12b to the backing layer 14b may be adjusted so that the backing layer 14b may be removed from the sealing layer, and samples recovered by piercing the sealing layer 12b. Alternatively the backing layer may be of a material thickness and strength such that the composite material layer may be pierced for access to the sample within the vessel.

In an alternate second embodiment, also schematically depicted by Fig. 1b, of the sealing device 10b, a composite sealer of two separate thermoplastic materials 12b, 14b may be formed by a process such as two shot injection molding such that a backer layer 14b of stiffer elastomeric material is formed in a first injection shot and a second heat softening/heat bondable sealing layer 12b is formed in a second injection shot. The mold is then rotated or otherwise manipulated to allow the injection over-mold of the second material over the first shot of stiffer material thereby forming the conformable/bondable sealing layer 12b. The resultant product possesses all the desirable qualities of ease of use/removal, optical clarity, conformablity, and capability to bond to the vessel during a thermal cycling protocol and utilizing only low temperature heated platens of thermal cycling as well as the quality of functioning as a pierceable and self healing septum. It is important to note that the construction described in this patent can be achieved by alternate techniques such as lamination and fall within the scope of the present invention.

Fig. 2 shows a sealing device 20 positioned between a heated platen 28 of a thermocycler apparatus and a microplate 25. The platen is vertically movable with the aid of shaft 29 or other suitable moving means. The vessel comprises a deck portion 26 and a plurality of well portions 27 whose open ends become faced with the sealing device 20. Appropriate deformation to form the seal will take place under a force of from 5 to 100 newtons (for a microscope slide-sized microplate) depending upon the hardness of the material.

The present embodiment provide a simple but elegant solutions for a problem which has been of concern to artisans in the field who wish to provide a device which both effectively seals and prevents cross contamination of individual samples in a multivial or multiwell set up while providing the benefits of septum functionality, and, optionally optical clarity. In addition, the multilayer composite sheet material can be manufactured inexpensively enough to be discarded after use as on piece, as opposed to a large number of caps or strips of tape.

The planar shape of the sealing device according to the invention typically corresponds to the footprints of microplates conforming to established microplate standards (SBS standards) or being a fraction thereof. In particular, the device has been found to suit well for approximately 25 mm x 76 mm microscope slide-sized plates. Such plates have been disclosed in the patent application PCT/FI2006/050379.

According to one embodiment, the sealing device has, in addition to the ability to seal, the ability to form light focusing geometries at each samples' well. Thus, we teach here a novel method of sealing a reaction vessel utilizing a clear thermoplastic rubber pad ranging in thickness from 0.5 mm to 3.00 mm which will, in the presence of the heat and temperature of the thermal cycling instrument heated lid platen, deform uniformly in the area defined by the internal diameter of the sealing tube under the pressure and temperature of the instrument, such deformation serving to form a light collimating/concentrating geometry (optical lens) over each well. The optically transparent or translucent thermoplastic rubbers described above suit well also for this purpose.

In still another embodiment, there may be, on both sides of the pad, a compliant film layer such as a polyester layer which will act as an interface layer as well as defining the total allowable deformation of the pad by way of acting as a deformation constraint.

According to one embodiment, there is provided a lower film or layer of material in which there is an array of holes which correspond in placement to the array of the sample vessel wells. Said holes in the film or layer serve to define the position of the deformed lenses and can serve the purpose lending greater uniformity to the formation the individual lenses' geometry within the array of lenses.

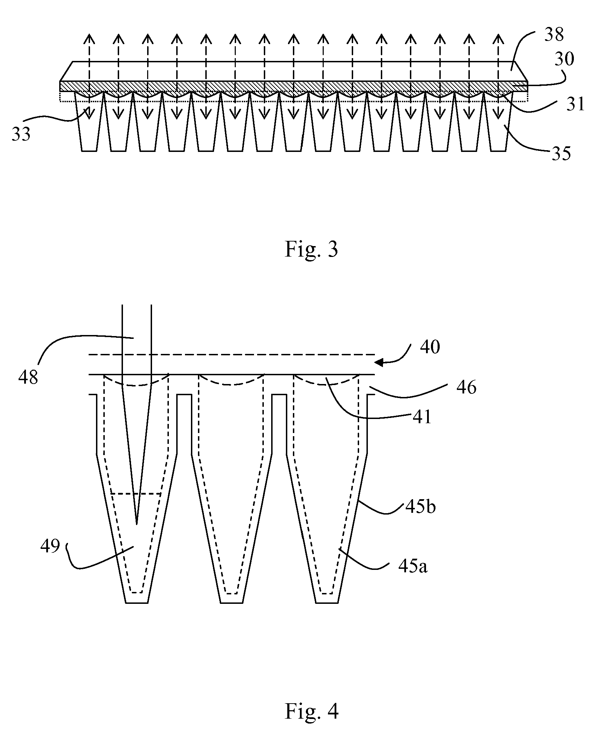

By using the embodiments either as described above or as combiner or varied, almost any types of lenses can be formed by the present method. Most useful lenses in this context are converging lenses, including in particular planoconvex and biconvex lenses, as shown in Figs. 3a and 3b. Fig. 3a shows planoconvex lenses formed by using a planar platen 38. Fig. 3b shows biconvex lenses formed by a platen 38 containing appropriate recesses that allow protrusion of the pad material also upwards.

The simultaneous sealing and lens-forming for preparing a quantitative PCR analysis comprises
- providing a vessel containing at least one sample space,
- placing a planar sealing device on the vessel to cover the at least one sample space, and
- applying pressure on the sealing device in order to deform the sealing device so as to form a light-refracting geometry individually for the at least one sample space.

Also the lens-forming is thus carried out at an elevated temperature of 80°C or more, in particular 85°C - 110°C, provided by the heated top platen of a thermocycler apparatus.

The light-refracting geometry formed is typically at least partly defined by the ends of the sample spaces opening at the upper surface of the vessel. They may, however be also formed is at least partly defined by constraining means included in the sealing device and/or at least partly by the surface geometry of means used for pressing the sealing device against the vessel.

Performing a quantitative PCR analysis can be carried out by
- sealing a sample vessel containing biological samples with a sealing device capable of forming a light-refracting geometry individually for each of the samples, the sealing device being pressed against the vessel in the sealing stage for forming said light-refracting geometry,
- subjecting the samples contained in the vessel to a temperature cycling regime according to a PCR protocol, and
- acquiring information from the samples optically through said sealing device.

Although this invention has been described in its preferred form with a certain degree of particularity, it is understood from the present disclosure that the preferred form has been made only by way of example and that numerous changes in the details of construction and the combination and arrangement of parts may be resorted as well as combination of functions within or as part of other devices, without departing from the spirit and scope of the invention as hereinafter claimed.

There are also thermoplastic elastomers that require higher temperatures than which can be produced with thermal cyclers performing the normal PCR protocol, whereby separate sealing devices need to be used or the thermal cycler needs to be operated outside the normal temperature range of the PCR protocol. These elastomers may provide similar benefits to low-temperature sealing materials of the present invention with regard to elastic deformations and bondability but are, however, not in the focus of this particular application.

## Claims

1. A sealing device for isolating the interior of a polypropylenic reaction vessel from the exterior of the reaction vessel, comprising a generally planar sealing layer intimately attachable to the vessel by heating so as to cover an open end of the vessel, **characterized in that** the sealing layer is formed of elastomeric material capable of forming a heat-actuated bond to the vessel at an elevated temperature achievable solely by the heated platen of a thermal cycling apparatus operating at normal polymerase chain reaction (PCR) protocol operating temperatures and placed in contact with the sealing device.

2. The sealing device according to claim 1, wherein the sealing layer is formed of material capable of being bonded to the vessel within a temperature range of 85°C to 110°C.

3. The sealing device according to claim 1 or 2, wherein the sealing layer is elastically deformable for allowing intimate conforming of the layer to the shape of the vessel surface.

4. The sealing device according to any of the preceding claims, wherein the sealing layer is essentially comprised of thermoplastic elastomer, in particular block copolymer thermoplastic elastomer, preferably containing a styrene-ethylene/butylene-styrene block copolymer.

5. The sealing device according to any of the preceding claims, wherein the sealing layer comprises block copolymer having blocks of different tacticity.

6. The sealing device according to any of the preceding claims, which is essentially comprised of said sealing layer.

7. The sealing device according to any of the preceding claims, which has the property of providing sample access by a needle passed and subsequently withdrawn through the device so as to function as a self-sealing septum.

8. The sealing device according to any of the preceding claims, wherein the sealing layer is optically clear.

9. The sealing device according to any of the preceding claims, wherein the sealing layer is between approximately 0.05 mm and 3.0 mm in thickness.

10. The sealing device according to any of the preceding claims, which comprises a first layer and at least one second layer applied thereon and providing backing to the first layer, the first layer being said sealing layer, and the layers being joined together to form a multilayer composite.

11. The sealing device according to claim 10, wherein the second layer(s) is/are optically clear.

12. The sealing device according to claim 10 or 11, wherein the second layer is a film of foil or a polymer film, or a laminate of these.

13. The sealing device according to any of claims 10 - 12, wherein the second layer is made of material which is essentially impermeable to water.

14. The sealing device according to any of claims 10 - 13, wherein the second layer is made of flexible material.

15. The sealing device according to any of claims 10 - 14, wherein the second layer is formed from a polyester or cycloolefin copolymer film.

16. The sealing device according to any of claims 10 - 15, wherein the second layer is between approximately 0.03 mm to 0.1 mm in thickness.

17. The sealing device according to any of claims 10 - 16, wherein the second layer is comprised of thermoplastic rubber with sufficient hardness and resistance to heat to maintain its mechanical properties when subjected to the heated platen operated at normal thermal cycling protocol operating temperatures, the rubber layer being preferably between 0.5 mm and 2.0 mm in thickness.

18. The sealing device according to any of claims 10 - 17, wherein the second layer is removably bonded to the sealing layer.

19. The sealing device according to any of the preceding claims, wherein the sealing layer is made of material having a hardness between Shore 30 on the OO scale and Shore 43 on the A scale

20. A method for sealing a biological reaction vessel containing at least one sample to be subjected to a PCR process using a thermal cycling apparatus comprising a heated platen for preventing condensation of vapor from the sample, the method comprising
- placing a planar sealing device onto the vessel, and
- bonding the sealing device to the vessel by heating the sealing device by contacting it with heating means,
**characterized in that**
- a sealing device according to any of claims 1 - 19 is used, and
- the bonding is carried out by using said thermal cycling apparatus, the heating means being said heated platen of the thermal cycling apparatus.

21. The method according to claim 20, wherein the heated platen is heated to a temperature causing the sealing layer of the sealing device to heat up to a temperature regime of 85°C to 110°C.

22. The method according to claim 20 or 21, wherein the PCR process is carried out after the bonding without removing the vessel from the thermal cycling apparatus.

23. Use of a heatable top platen of a thermal cycling apparatus for bonding a sealing layer to a reaction vessel.
